(19) Europäisches Patentamt
European Patent Office
Office européen des brevets

(11) **EP 1 754 924 A1**

(12) **EUROPÄISCHE PATENTANMELDUNG**

(43) Veröffentlichungstag:
**21.02.2007  Patentblatt 2007/08**

(51) Int Cl.:
*F16L 55/168* (2006.01)   *F16L 41/04* (2006.01)

(21) Anmeldenummer: **06016947.1**

(22) Anmeldetag: **14.08.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **15.08.2005   DE 102005038723**

(71) Anmelder:
• **ewp Entwicklungsplanung und wirtschaftliche Projektbegleitung GmbH**
**38442 Wolfsburg (DE)**

• **Stock, Martin**
**38518 Gifhorn (DE)**

(72) Erfinder: **Stock, Martin**
**38518 Gifhorn (DE)**

(74) Vertreter: **Lins, Edgar et al**
**Gramm, Lins & Partner GbR,**
**Theodor-Heuss-Strasse 1**
**38122 Braunschweig (DE)**

(54) **Abpumpvorrichtung für Behälter mit einer Leckage sowie Abpumpsystem**

(57)   Es wird eine Abpumpvorrichtung für Behälter oder Rohre offenbart, die eine Leckage (12) in einer Wand (13) aufweisen. Die Abpumpvorrichtung ist mit einem Rahmengestell (1) mit mehreren Abstandshaltern versehen, an denen jeweils ein Saugnapf (6) angeordnet ist, so dass das Rahmengestell (1) an der Außenseite des Behälters vor der Leckage (12) von dieser beabstandet anordnenbar und mittels der Saugnäpfe (6) an der Wand (13) befestigbar ist. Zur Vermeidung von Umweltschäden ist erfindungsgemäß eine die Leckage (12) überdeckend positionierbare an dem Rahmengestell (1) angeordnete Saugglocke (11) mit einer sperrbaren Anschlussvorrichtung zum Abpumpen eines Leckagefluids vorgesehen.

Fig. 2

EP 1 754 924 A1

**Beschreibung**

Die vorliegende Erfindung betrifft eine Abpumpvorrichtung für Behälter oder Rohre, die eine Leckage in einer Wand aufweisen, mit einem Rahmengestell mit mehreren Abstandshaltern, an denen jeweils ein Saugnapf angeordnet ist, so dass das Rahmengestell an der Außenseite des Behälters vor der Leckage von dieser beabstandet anordnenbar und mittels der Saugnäpfe an der Wand befestigbar ist.

Bei dem Transport von Fluiden werden Tankwagen, Kesselwagen und/oder Rohrleitungen eingesetzt, die häufig einen rohrförmigen bzw. gewölbten Querschnitt aufweisen. Entsteht aufgrund eines Unfalles oder einer sonstigen Beschädigung in der Wand eine Leckage, kann das transportierte Medium austreten. Insbesondere bei Gefahrgut, beispielsweise entzündlichen und/oder toxischen Fluiden, ist es erforderlich, die Kontamination von Menschen, Tieren, Umwelt und Sachen möglichst schnell einzudämmen oder zu verhindern.

Häufig werden Leckageöffnungen mit einem aufgesetzten und aufblasbaren Kissen zum Abdichten verwendet, das mit einem Spanngurt an dem Behälter oder Rohr fixiert wird. Das Anlegen eines Spanngurtes mit aufblasbarem Kissen wird allerdings mit zunehmendem Durchmesser der Behälter immer problematischer, weil ein erhöhter Aufwand an Personal und Zeit erforderlich ist. Um den Einsatz eines abdichtenden Kissens dadurch zu vereinfachen, dass weniger Zeit benötigt wird, um geeignete Spannmittel zu verankern und somit Druck auf das Dichtkissen ausüben zu können, ist gemäß der DE 196 16 856 A1 eine Leckdichtvorrichtung mit einem Dichtkissen und mit diesem zusammenwirkenden Spannmitteln offenbart. Die Leckdichtvorrichtung weist mehrere Hafteinrichtungen auf, an denen die Spannmittel angreifen und die in Nähe des Dichtkissens an der Behälterwand befestigbar sind.

Eine ebenfalls rein abdichtende Vorrichtung ist in der DE 39 14 435 C2 offenbart. Diese Abdichtvorrichtung weist eine Druckplatte mit Dichtungsauflage auf, die über eine Spindelanordnung mit einem Tragelement verbunden ist. An dem Tragelement befinden sich mindestens zwei Saugglocken bzw. Saugnäpfe zur Befestigung an der Wand. Die Saugnäpfe sind mit einer Unterdruckpumpe verbunden, so dass die Saugnäpfe aufgrund des Unterdruckes fest an einer Behälterwand anhaften. Nach der sicheren Befestigung der Saugnäpfe wird über die Spindel die Druckplatte gegen die Leckage gedrückt, um die Leckage abzudichten.

In der DE 39 42 228 A1 wird alternativ eine Abdichtvorrichtung mit einer elastischen Glocke offenbart, durch die ein an eine Saugvorrichtung anschließbares Rohr geführt ist. An dem sich innerhalb der Glocke befindlichen Ende des Rohres ist eine Stirnplatte mit einer Dichtungsauflage vorgesehen, die sich bei dem Anlegen von Unterdruck an den Innenraum der Glocke über der Leckage festsaugt, um die Leckage abzudichten. Etwaige größere Mengen sich in der Glocke ansammelnden Leckagefluids werden über das Rohr mit abgesaugt und gelangen somit in die Umwelt.

Vor diesem Hintergrund ist die Aufgabe der vorliegenden Erfindung, eine aufgetretene Leckage schnell und einfach abzudichten und anschließend das Leckagefluid mit möglichst geringer Kontamination der Umwelt abzusaugen.

Diese Aufgabe wird durch eine Abpumpvorrichtung mit den Merkmalen des Anspruchs 1 sowie durch ein Abpumpsystem mit den Merkmalen des Anspruchs 9 gelöst.

Bei einer Abpumpvorrichtung der eingangs erwähnten Art ist erfindungsgemäß eine die Leckage überdeckend positionierbare an dem Rahmengestell angeordnete Saugglocke mit einer sperrbaren Anschlussvorrichtung zum Abpumpen eines Leckagefluids vorgesehen. Zunächst wird durch die Positionierung der Saugglocke oberhalb der Leckageöffnung selbige abgedichtet. Dadurch wird eine weitere Kontamination durch das Leckagefluid verhindert, da das aus der Leckageöffnung austretende Fluid nur noch in den von der Saugglocke umgebenden Raum eindringen kann. Anschließend kann an der Anschlussvorrichtung eine Abpumpeinrichtung angeschlossen und die sperrbare Anschlussvorrichtung geöffnet werden, so dass das Leckagefluid aus der Saugglocke durch die geöffnete Anschlussvorrichtung über eine daran befestigbare Rohrleitung in einen Sammelbehälter geleitet werden kann.

Zur sicheren Befestigung bzw. Anhaften an der Behälterwand ist bei einer vorteilhaften Ausgestaltung der erfindungsgemäßen Abpumpvorrichtung vorgesehen, dass jeder Saugnapf einen Anschluss zum Verbinden mit einer Unterdruckeinrichtung aufweist.

Bei einer bevorzugten Ausführungsform der erfindungsgemäßen Abpumpvorrichtung weist das Rahmengestell einen mit einer Unterdruckeinrichtung verbundenen Hohlraum auf und jeder Saugnapf ist mit dem Hohlraum des Rahmengestells verbunden. Hierdurch ist lediglich eine einzige lange Verbindungsleitung zwischen der Unterdruckeinrichtung und dem Rahmengestell erforderlich. Der Anschluss der Saugnäpfe erfolgt mittels kurzer Verbindungsleitungen von den Saugnäpfen zu dem Rahmengestell, das somit als ein Verteiler des Unterdrucks dient.

Um einen sicheren und haftenden Halt der Saugnäpfe an beliebig geformten Behälterwänden zu gewährleisten, sind zwischen den Abstandshaltern und den Saugnäpfen Gelenke, beispielsweise Kugelgelenke, vorgesehen. Dadurch sind die Saugnäpfe in Bezug auf die Abstandshalter situationsbedingt ausrichtbar.

Bei einer vorteilhaften Ausführungsform der erfindungsgemäßen Abpumpvorrichtung sind die Abstandshalter längenverstellbare pneumatische Zylindervorrichtungen. Dies ermöglicht, dass mittels der Zylinder eine ausreichende Anpresskraft zur Verfügung steht, um die Saugglocke an die Behälterwand dichtend anzudrücken. Die Zylindervorrichtungen können mit Unterdruck oder Überdruck betrieben werden.

Bevorzugt sind die Zylindervorrichtungen an eine Überdruckeinrichtung anschließbar und mittels eines Bedienhebels in der Länge einstellbar. Die Überdruckeinrichtung kann beispielsweise Druckluft sein, die üblicherweise bei Einsatzfahrzeugen von Rettungskräften als komprimierte Atemluft in tragbaren Atemluftflaschen zur Verfügung steht. Durch die Bedienhebel kann jeder Zylinder einzeln oder ggf. mehrere Zylinder paarweise bedient werden, um eine optimale Ausrichtung des Rahmengestells und der Saugglocke zu gewährleisten.

Damit auch chemisch-aggressive Leckagefluide die Abpumpvorrichtung nicht beschädigen, weisen die Saugnäpfe und/oder die Saugglocke zumindest teilweise ein flexibles und chemisch-resistentes Material auf. Weiterhin können das Rahmengestell und/oder die Zylindervorrichtungen aus Edelstahl sein, um eine Beschädigung durch Chemikalien weitestgehend zu vermeiden.

Das erfindungsgemäße Abpumpsystem für Behälter einschließlich Rohre, die eine Leckage in einer Wand aufweisen, ist mit einer erfindungsgemäßen Abpumpvorrichtung und mit einer über mindestens eine Leitung mit der Abpumpvorrichtung verbundenen Unterdruckeinrichtung versehen.

Bei einem bevorzugten Ausführungsbeispiel des erfindungsgemäßen Abpumpsystems weist die Unterdruckeinrichtung ein Venturirohr auf. Das Venturirohr kann zwischen üblichen Wasserschläuchen der Einsatzkräfte eingesetzt werden, wodurch eine einfache und robuste Unterdruckquelle für das Abpumpsystem zur Verfügung steht.

Damit das Leckagefluid ohne Kontamination bzw. Schädigung der Umwelt aus dem beschädigten Behälter abgeleitet werden kann, weist das erfindungsgemäße Abpumpsystem eine über die Anschlussvorrichtung an der Saugglocke anschließbare Abpumpeinrichtung zum Abpumpen bzw. Absaugen des Leckagefluids auf. Die Bereitstellung der Absaugkraft ist hierbei getrennt von der Bereitstellung des Unterdruckes zur Erzeugung der Haftkraft der Saugnäpfe. Dadurch bleibt die Haftkraft erhalten, auch wenn beim Abpumpen der Fluidspiegel unter die Leckageöffnung fällt und die Abpumpeinrichtung das darüber befindliche Gas absaugt.

Nachfolgend wird die vorliegende Erfindung anhand der detaillierten Beschreibung eines Ausführungsbeispiels unter Bezug auf die beigefügten Zeichnungen beispielhaft näher erläutert, in denen:

**Figur 1 -** eine perspektivische Ansicht eines Rahmengestells für eine erfindungsgemäße Abpumpvorrichtung zeigt;

**Figur 2 -** einen Querschnitt durch das Rahmengestell aus Figur 1 zeigt; und

**Figur 3 -** einen Querschnitt durch ein Venturi-Rohr zur Erzeugung von Unterdruck zeigt.

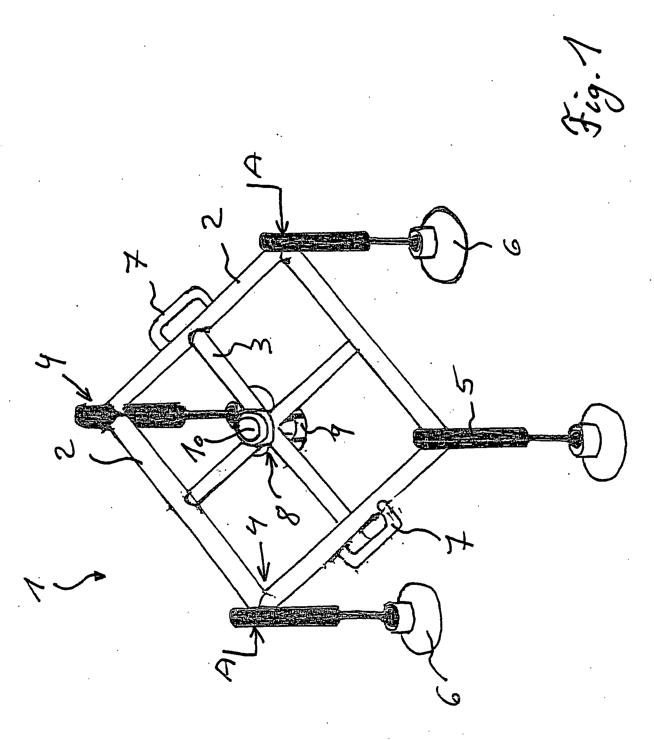

In der Figur 1 ist in einer perspektivischen Ansicht das Rahmengestell 1 gezeigt. Das Rahmengestell 1 weist einen aus vier Rohren 2 gebildeten äußeren Rahmen und ein inneres Rahmenkreuz 3 auf. Die vier Rohre 2 bilden zusammen ein Rechteck, insbesondere in dem dargestellten Ausführungsbeispiel ein Quadrat. Das Rahmenkreuz 3 ist zwischen den Rohren 2 in der von den Rohren 2 aufgespannten Ebene angeordnet.

In den Eckbereichen 4 des Rahmengestells 1 sind insgesamt vier Zylinder 5 als Abstandshalter vorgesehen. Die Zylinder 5 sind im Wesentlichen senkrecht zu der von den Rohren 2 und dem Rahmenkreuz 3 aufgespannten Ebene im Betriebszustand angeordnet. Zu Transportzwecken können die Zylinder 5 einklappbar oder abnehmbar sein, wodurch das für den Transport in einem Einsatzfahrzeug erforderliche Raumvolumen deutlich reduziert werden kann.

An den in die gleiche Richtung weisenden Enden der Zylinder 5 ist jeweils ein Saugnapf 6 vorgesehen, mit denen das Rahmengestell 1 an einer äußeren Wandfläche eines Behälters anhaftend befestigt werden kann. Die Saugnäpfe 6 sind mittels Unterdruckleitungen (nicht dargestellt) mit dem Rahmengestell 1 verbunden, das hohl und druckdicht ist. An dem Hohlraum des Rahmengestells 1 ist eine Unterdruckleitung zur Verbindung mit einer Unterdruckquelle vorgesehen. Der Hohlraum dient somit als Verteiler und Speicher für den Unterdruck. Die Anzahl der Unterdruckleitungen zur Versorgung der Saugnäpfe 6 mit Unterdruck lässt sich auf diese Weise verringern.

Die Halte- bzw. Haftkraft wird bevorzugt durch den an den Saugnäpfen 6 anschließbaren Unterdruck erzeugt. Alternativ oder zusätzlich können die Saugnäpfe 6 mittels einer Klebschicht befestigt werden. Dadurch sind die Saugnäpfe 6 aber nur einmal verwendbar, da bei einer Loslösung von der Behälterwand die Saugnäpfe 6 beschädigt werden können.

An zwei gegenüberliegenden Rohren 2 ist nach außen weisend jeweils ein Haltegriff 7 vorgesehen. Die Haltegriffe 7 dienen zum Transport des Rahmengestells 1 durch das Einsatzpersonal. An den Haltegriffen 7 oder zumindest in der Nähe davon können die Bedieneinheiten (nicht dargestellt) für die Zylinder 5 und/oder die Saugnäpfe 6 befestigt werden.

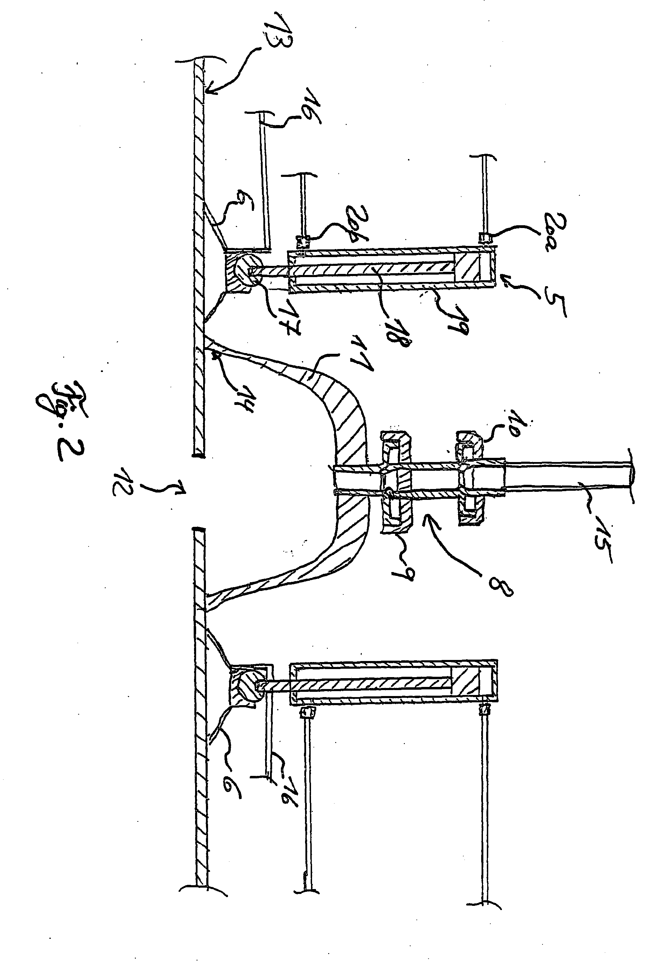

Aus Gründen der Übersichtlichkeit ist in der Figur 1 keine Saugglocke (11 in Figur 2) dargestellt. Der Figur zu entnehmen ist jedoch eine Anschlussvorrichtung 8, die sich in der Mitte des Rahmenkreuzes 3 befindet. Die Anschlussvorrichtung 8 weist einen in die Richtung der Standfläche weisenden ersten bzw. unteren Anschluss 9 für die Saugglocke sowie einen in die entgegen gesetzte Richtung weisenden zweiten bzw. oberen Anschluss 10 für Armaturen, beispielsweise Schläuche, Absperreinheiten etc., auf. Die Anschlüsse 9, 10 können jegliche geeignete Anschlüsse bzw. Kupplungen sein, insbesondere eine aus dem Lebensmittelbereich bekannte so genannte Milchkupplung.

Figur 2 zeigt eine Querschnittdarstellung durch das Rahmengestell 1 entlang einer diagonalen Linie A-A in Figur 1, bei der die Rohre 2 (Figur 1) und das Rahmenkreuz 3 (Figur 1) weggelassen wurden. Deutlich zu erkennen ist in dieser Figur die Saugglocke 11, die über eine Leckageöffnung 12 in einer Wand 13 eines Behälters positionierbar ist. Die Saugglocke 11 liegt mit ihrem Rand 14 dichtend auf der Wand 13 an. Um eine größtmögliche Abdichtung unabhängig von der Oberflächenbeschaffenheit der Wand 13 zu erzielen, ist der Rand 14 der Saugglocke 11 bevorzugt aus einem flexiblen Material hergestellt.

Oberhalb der Saugglocke 11 ist die Anschlussvorrichtung 8 des Rahmengestells 1 (Figur 1) mit dem unteren Anschluss 9 und dem oberen Anschluss 10 vorgesehen. Die Saugglocke 11 ist insbesondere für Transportzwecke von dem Rahmengestell 1 lös- bzw. abnehmbar. An dem unteren Anschluss 9 können im Einsatzfall unterschiedliche Saugglocken 11 angeschlossen werden, die beispielsweise verschiedene Größen und/oder verschiedenes Material aufweisen. An dem oberen Anschluss 10 ist beispielsweise ein Schlauch 15 zur Fortleitung des Leckagefluids anschließbar, der mit einer entsprechenden Absaugpumpe (nicht dargestellt) verbunden ist. Damit die Leckage 12 vor einem Abpumpen bzw. Absaugen des Leckagefluids mittels der Saugglocke 11 abgedichtet wird, weist die Anschlussvorrichtung 8 ein Absperrventil (nicht dargestellt), beispielsweise ein Kugelhahnventil oder ein anderes geeignetes Ventil, auf.

Seitlich neben der Saugglocke 11 sind die Saugnäpfe 6 angeordnet, die ebenfalls an der Wand 13 anliegen und aus einem flexiblen Material bestehen. Die Saugnäpfe 6 sind über Unterdruckleitungen 16 mit einer Unterdruckeinrichtung (nicht dargestellt) verbunden. Der Unterdruck bewirkt, dass die Saugnäpfe stabil und sicher an der Wand 13 haften. Mittels eines Kugelgelenks 17 ist der Saugnapf 6 verschwenkbar an einer Zylinderstange 18 des Zylinders 5 gelagert. Die Zylinderstange 18 erstreckt sich in Längsrichtung innerhalb eines Zylindergehäuses 19, das zwei Zuleitungsanschlüsse 20a und 20b aufweist.

Durch Zuführung von Druckluft durch den Anschluss 20b wird die Zylinderstange 18 in das Zylindergehäuse 19 eingefahren. Dadurch wird das an dem Zylindergehäuse 19 befestigte Rahmengestell 1 in Richtung der beschädigten Behälterwand 13 bewegt und die ebenfalls mit dem Rahmengestell 1 verbundene Saugglocke 11 mit ihrem unteren Rand 14 gegen die Behälterwand 13 gedrückt. Auf diese Weise wird durch die Zylinder 5 die Anpresskraft für die Saugglocke 11 bereitgestellt. Es ist klar, dass die Anpresskraft für die Saugglocke 11 die Summe der Haftkräfte der Saugnäpfe 6 nicht überschreiten darf.

Durch Zuführen von Druckluft über den Anschluss 20a wird die Zylinderstange 18 aus dem Kolbengehäuse 19 ausgefahren und die Anpresskraft der Saugglocke 11 an der Behälterwand 13 verringert, bis sich schließlich die Saugglocke 11 von der Behälterwand 13 löst.

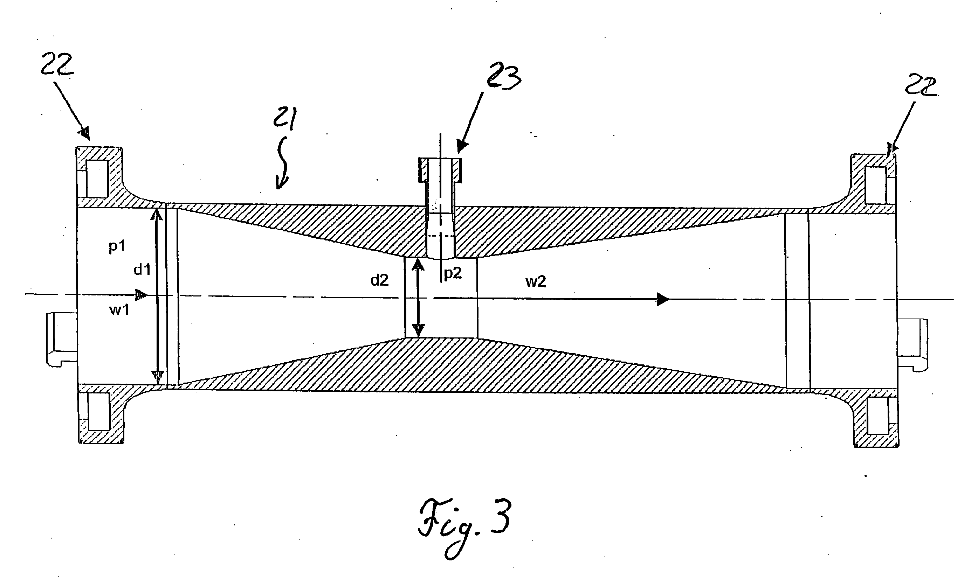

Zur Erzeugung des Unterdrucks für die Saugnäpfe 6 ist ein in eine Schlauchleitung eingebrachtes Venturirohr 21 vorgesehen, das in Figur 3 in einer Querschnittsdarstellung gezeigt ist. Damit das Venturirohr 21 zur Erzeugung des Unterdruckes von Einsatzkräften, beispielsweise der Feuerwehr, ohne großen Aufwand eingesetzt werden kann, weist es an seinen beiden Enden jeweils einen zu üblichen Feuerwehranschlüssen kompatiblen Anschluss 22, beispielsweise eine B-Kupplung, auf.

In der Längsrichtung des Venturirohres 21 in etwa mittig ist ein Unterdruckanschluss 23 vorgesehen, an dem über entsprechende Leitungen (nicht dargestellt) die Saugnäpfe 6 anschließbar sind. Der Querschnitt des Venturirohres 21 ist im Bereich des Unterdruckanschlusses 23 verringert, um den Unterdruck zu erzeugen.

Im Bereich des Anschlusses 22 ist der Innendurchmesser $d_1$ beispielsweise 0,075 m. Der Druck $p_1$ beträgt dort beispielsweise 650 kPa. Bei einem Volumenstrom von 0,0133 $m^3$/s ergibt sich für das durchströmende Wasser eine Geschwindigkeit $w_1$ von etwa 3 m/s. Daraus folgt für die Geschwindigkeit $w_2$ im Bereich des verminderten Querschnitts mit Durchmesser $d_2$ von 0,04 m eine Steigerung auf $w_2$ gleich etwa 11 m/s. Nach der Formel der Strahlpumpe lässt sich der Druck $p_2$ im Bereich des Unterdruckanschluss 23 wie folgt berechnen:

$$p_2 = p_1 - \frac{\rho_w}{2} \cdot w_2{}^2 \cdot \left( \frac{d_1{}^4}{d_2{}^4} - 1 \right)$$

Mit den vorher angegebenen Werten folgt für den Druck $p_2$ = 13,77 kPa = 0,1377 bar. Der Unterdruck wird über den Anschluss 23 und eine nicht dargestellte Leitung an das Rahmengestell 1 und die Saugnäpfe 6 (Figuren 1 und 2) weitergeleitet.

Durch die hier vorliegende Wahl des Druckes $p_1$ und der Verhältnisse der Durchmesser $d_1$/$d_2$ herrscht im Bereich des Unterdruckanschlusses 23 ein geringerer Druck als der Bezugsdruck bzw. Umgebungsdruck $p_0$. Mit $p_0$ = 1,013 bar ergibt sich der Unterdruck $p_u$ aus Berechnung über die Höhe der Wassersäule zu $p_u$ = 0,892 bar.

Der Unterdruck $p_u$ wird den Saugnäpfen 6 zugeführt. Bei einem Durchmesser von 0,2 m für jeden Saugnapf 6 ergeben sich Halte- bzw. Saugkräfte von etwa 2,8 kN pro Saugnapf. Die gesamte Vorrichtung kann folglich mit vier Saugnäpfen eine Masse von 1144 kg halten. Mittels des Venturirohrs 21 steht eine für Einsatzkräfte in Kombination mit deren sonstiger Standardausrüstung in einfacher Weise herstellbare Unterdruckquelle für die Saugnäpfe zur Verfügung, die darüber hinaus sehr robust ist.

**Patentansprüche**

1. Abpumpvorrichtung für Behälter oder Rohre, die eine Leckage (12) in einer Wand (13) aufweisen, mit einem Rahmengestell (1) mit mehreren Abstandshaltern, an denen jeweils ein Saugnapf (6) angeordnet ist, so dass das Rahmengestell (1) an der Außenseite des Behälters vor der Leckage (12) von dieser beabstandet anordnenbar und mittels der Saugnäpfe (6) an der Wand (13) befestigbar ist, **gekennzeichnet durch** eine die Leckage (12) überdeckend positionierbare an dem Rahmengestell (1) angeordnete Saugglocke (11) mit einer sperrbaren Anschlussvorrichtung (8) zum Abpumpen eines Leckagefluids.

2. Abpumpvorrichtung nach Anspruch 1, **dadurch gekennzeichnet, dass** jeder Saugnapf (6) einen Anschluss zum Verbinden mit einer Unterdruckeinrichtung (21) aufweist.

3. Abpumpvorrichtung nach Anspruch 1 oder 2, **dadurch gekennzeichnet, dass** das Rahmengestell (1) einen mit einer Unterdruckeinrichtung (21) verbundenen Hohlraum aufweist und jeder Saugnapf (6) mit dem Hohlraum des Rahmengestells (1) verbunden ist.

4. Abpumpvorrichtung nach einem der vorstehenden Ansprüche, **dadurch gekennzeichnet, dass** zwischen den Abstandshaltern und den Saugnäpfen (6) Gelenke (17) vorgesehen sind.

5. Abpumpvorrichtung nach einem der vorstehenden Ansprüche, **dadurch gekennzeichnet, dass** die Abstandshalter längenverstellbare pneumatische Zylindervorrichtungen (5) sind.

6. Abpumpvorrichtung nach Anspruch 5, **dadurch gekennzeichnet, dass** die Zylindervorrichtungen (5) an eine Überdruckeinrichtung anschließbar und mittels eines Bedienhebels in der Länge einstellbar sind.

7. Abpumpvorrichtung nach einem der vorstehenden Ansprüche, **dadurch gekennzeichnet, dass** die Saugnäpfe (6) und/oder die Saugglocke (11) zumindest teilweise ein flexibles und chemisch-resistentes Material aufweisen.

8. Abpumpvorrichtung nach einem der vorstehenden Ansprüche, **dadurch gekennzeichnet, dass** das Rahmengestell (1) und/oder die Zylindervorrichtungen (5) aus Edelstahl sind.

9. Abpumpsystem für Behälter einschließlich Rohre, die eine Leckage (12) in einer Wand (13) aufweisen, mit einer Abpumpvorrichtung nach einem der Ansprüche 1 - 8 und mit einer über mindestens eine Leitung mit der Abpumpvorrichtung verbundenen Unterdruckeinrichtung (21).

10. Abpumpsystem nach Anspruch 9, **dadurch gekennzeichnet, dass** die Unterdruckeinrichtung (21) ein Venturirohr aufweist.

11. Abpumpsystem nach Anspruch 9 oder 10, **dadurch gekennzeichnet, dass** eine über die Anschlussvorrichtung (8) an der Saugglocke (11) anschließbare Abpumpeinrichtung zum Abpumpen des Leckagefluids vorgesehen ist.

Fig. 1

EP 1 754 924 A1

Fig. 2

7

EP 1 754 924 A1

Fig. 3

**Europäisches Patentamt**

**EUROPÄISCHER RECHERCHENBERICHT**

Nummer der Anmeldung

EP 06 01 6947

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,A | DE 196 16 856 A1 (MANFRED VETTER GMBH & CO [DE]) 10. April 1997 (1997-04-10) * Zusammenfassung; Abbildungen * ----- | 1-11 | INV. F16L55/168 F16L41/04 |
| D,A | DE 39 14 435 A1 (BAYER AG [DE]) 8. November 1990 (1990-11-08) * Zusammenfassung; Abbildungen * ----- | 1 | |
| D,A | DE 39 42 228 A1 (BAYER AG [DE]) 28. Juni 1990 (1990-06-28) * Zusammenfassung; Abbildungen * ----- | 1 | |
| A | US 6 848 481 B1 (BAY ANDREW T [US] ET AL) 1. Februar 2005 (2005-02-01) * Zusammenfassung; Abbildungen * ----- | 1 | |
| A | EP 0 522 934 A (GAZ DE FRANCE [FR]) 13. Januar 1993 (1993-01-13) * Zusammenfassung; Abbildungen * ----- | 1 | |

**RECHERCHIERTE SACHGEBIETE (IPC)**

F16L
B60P

Der vorliegende Recherchenbericht wurde für alle Patentansprüche erstellt

| Recherchenort | Abschlußdatum der Recherche | Prüfer |
|---|---|---|
| Den Haag | 23. Oktober 2006 | Balzer, Ralf |

EPO FORM 1503 03.82 (P04C03)

# EP 1 754 924 A1

**ANHANG ZUM EUROPÄISCHEN RECHERCHENBERICHT
ÜBER DIE EUROPÄISCHE PATENTANMELDUNG NR.**

EP 06 01 6947

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-10-2006

| Im Recherchenbericht angeführtes Patentdokument | | Datum der Veröffentlichung | Mitglied(er) der Patentfamilie | | Datum der Veröffentlichung |
|---|---|---|---|---|---|
| DE 19616856 | A1 | 10-04-1997 | KEINE | | |
| DE 3914435 | A1 | 08-11-1990 | KEINE | | |
| DE 3942228 | A1 | 28-06-1990 | KEINE | | |
| US 6848481 | B1 | 01-02-2005 | KEINE | | |
| EP 0522934 | A | 13-01-1993 | FR | 2679002 A1 | 15-01-1993 |
| | | | JP | 5240389 A | 17-09-1993 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19616856 A1
- DE 3914435 C2
- DE 3942228 A1